# EUROPEAN PATENT APPLICATION

(11) **EP 2 112 503 A2**
(43) Date of publication of application: **28.10.2009**
(21) Application number: 09158322.9
(22) Date of filing: 21.04.2009
(51) Int. Cl.: G01N 21/954, G01N 21/88, G01N 33/02

(54) **Method and device for verifying the absence of foodstuff residues in moulds for foodstuffs, in particular chocolate products**

(30) Priority: 22.04.2008 IT TO20080312
(71) Applicant: OPM S.p.A., 12066 Monticello d'Alba (IT)
(72) Inventor: Gurrieri, Dario, 12051 Alba (IT)
(74) Representative: Jorio, Paolo

(57) **Abstract**

Checking method and device for verifying the absence of foodstuff residues in moulds for foodstuffs, in particular chocolate products; according to the method, a light beam (17) is projected in a plane of projection on a mould (2), so as to trace at least one luminous line (20); the luminous line (20) is visualized by a video camera or camera (21) arranged outside the plane of projection; the frames acquired by the video camera or camera (21) are then processed to obtain data to compare against a reference model.

## Description

The present invention relates to a checking method for verifying the absence of foodstuff residues in moulds for foodstuffs, in particular chocolate products.

In prior art moulding systems for chocolate products the moulds are mounted on non-stop conveyer lines or pushed intermittently, made to slide along guides by means of pusher devices mounted on chain links. At the end of the process, the finished products are removed from the moulds, for example due to the force of gravity or by striking the back of the moulds and overturning these so that the finished products are deposited onto an outfeed conveyor. The moulds then return to the start of the process after passing through an inspection station, where they are checked for any chocolate residues in the moulds after demoulding. If there are any chocolate residues, the non-compliant moulds are expelled from the conveyor line to be cleaned.

The presence/absence of residues is normally verified by using mechanical feelers. However, this method is time-consuming and does not allow the entire surface of the mould to be inspected in detail. Attempts have been made to overcome these drawbacks using vision systems, which take a photograph of the overall image of the mould, which is then processed to interpret any differences in colour or luminosity which indicate the presence of chocolate residues.

The latter prior art solution is not very satisfactory, in that with some foodstuffs it is not possible to determine clear differences in colour or luminosity with respect to the mould, and such foodstuffs therefore produce false response signals.

Moreover, light sources are needed to illuminate the entire mould. Said light sources must generate a very bright light so that there are no shadow zones, which would also produce false response signals. High-power light sources must be used, and therefore they generate heat and tend to warm the mould. Said warming is undesired, because the temperature of the chocolate moulds must stay within an ideal range throughout all phases of moulding.

The object of the present invention is to provide a checking method for verifying the absence of foodstuff residues in moulds for foodstuffs, in particular chocolate products, which overcomes the problems described above simply and inexpensively and, in particular, is relatively quick, sufficiently accurate and can easily be used, controlled and set by the user.

According to the present invention there is provided a checking method for verifying the absence of foodstuff residues in moulds for foodstuffs, in particular chocolate products, as defined in claim 1.

The present invention also relates to a checking device for verifying the absence of foodstuff residues in moulds for foodstuffs, in particular chocolate products, as defined in claim 14.

The present invention will now be described with reference to the accompanying drawings, illustrating a non-limiting embodiment thereof, in which:
- figure 1 is a schematic view of a preferred embodiment of a checking device for verifying the absence of foodstuff residues in moulds for foodstuffs, in particular chocolate products, according to the method of the present invention;
- figure 2 is a block diagram relating to some steps of the method of the present invention;
- figure 3 is a partial view of two matrices obtained in the steps of the method of figure 2;
- figure 4 shows, on an enlarged scale, part of a frame acquired by the device of figure 2; and
- figure 5 is a schematic illustration of some alternative embodiments of the device of figure 1.

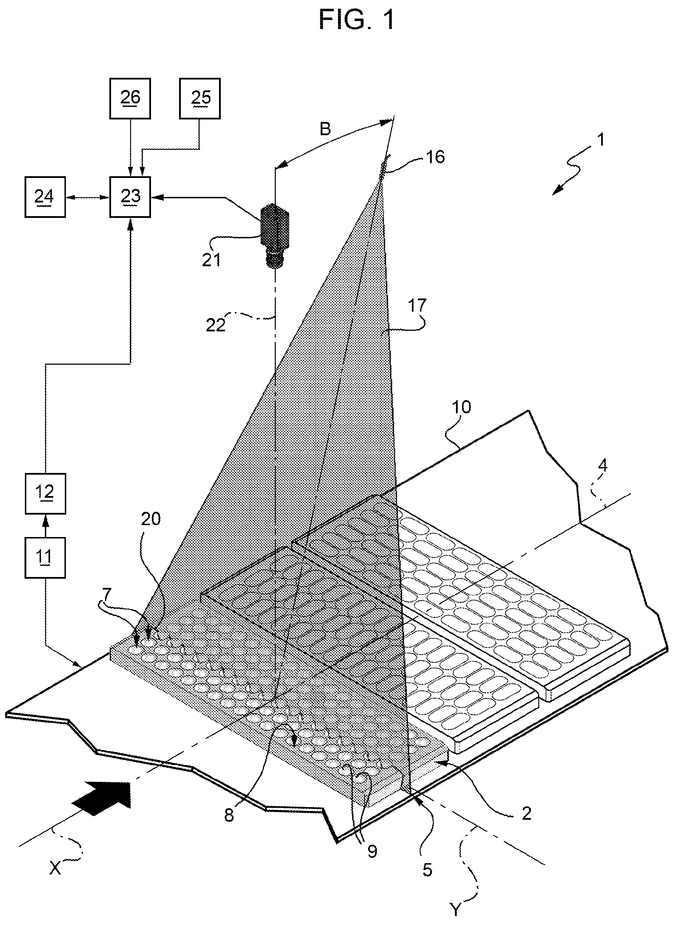

In figure 1, number 1 indicates a checking device, which is part of a moulding line (not illustrated) for foodstuffs, in particular chocolate products, and is used to verify the absence of foodstuff residues in a sequence of moulds 2. Said residues could for example be due to errors or imperfections in the demoulding process.

In the moulding line, the moulds 2 are conveyed in sequence and continuously or intermittently (in a manner that is not illustrated) along a closed loop path, of which only a straight portion 4 is illustrated. The portion 4 of the path extends along a horizontal longitudinal axis X and passes through an inspection station or zone 5, which is elongated along a horizontal axis Y orthogonal to the axis X.

The moulds 2 define respective trays or cavities 7, which are filled during the moulding process and then demoulded, they are arranged in rows parallel to the axis Y, they are identical in each mould 2, and may be different in the various moulds 2.

Each mould 2 has an upper surface 8, which defines the edge of the openings 9 of the cavities 7 and is preferably flat.

The moulds 2 are conveyed in a row along the axis X by a conveyor 10 (schematically and partially illustrated), which is driven by a motor 11 (schematically illustrated), with adjustable feeding speeds. The conveyor 10, of a known type, maintains the moulds 2 in previously defined positions and, thus, in relative fixed positions, and with the surfaces 8 arranged horizontally. A position sensor 12 measures, directly or indirectly, the progress of the conveyor 10 and, thus, the travel of the moulds 2 along the axis X. In particular, the sensor 12 is defined by an encoder connected to the motor 11.

The unit 1 comprises a light source 16, which is arranged in a fixed position above the conveyor 10 and projects a light beam 17 on the zone 5 lying in a plane of projection arranged transversely with respect to the axis X so as to trace a luminous line 20 on the surface 8 and on the inside surface of the cavity 7. In particular, the beam 17 is defined by a laser stripe, i.e. a monochromatic, coherent and directional light.

Due to the relative motion between the mould 2 and the source 16, the luminous line 20 passes over the upper surface of the mould 2 along the axis X.

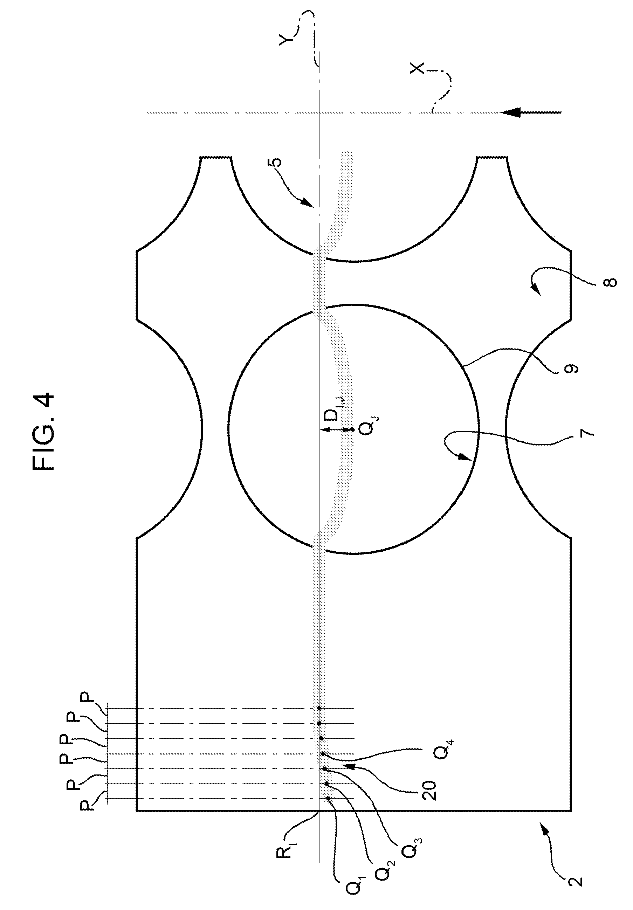

As shown in figure 4, in correspondence with the surface 8, the luminous line 20 comprises segments that are substantially rectilinear and parallel to the axis Y; in correspondence with recesses, the luminous line 20 comprises curved portions that are displaced along the axis X with respect to the substantially rectilinear segments.

With reference to figure 1, the device 1 comprises a video camera or camera 21, having a CCD-type sensor and arranged in a fixed position, for example at approximately one metre from the conveyor 10, outside the plane of projection of the beam 17. In particular, the video camera 21 is directed towards the centre of the zone 5 in a direction 22 that lies in a vertical plane orthogonal to the plane of projection of the beam 17. The angle B between the direction 22 and the beam 17 is for example 15°.

The unit 1 comprises an acquisition and processing unit 23, which is connected to the video camera 21 and to other processors and/or control units (not illustrated) of the moulding line and records, in a memory 24, an ordered sequence of frames visualized by the video camera 21. Each acquisition is determined by a respective trigger signal emitted, in particular, on the basis of the position signal received by the sensor 12. The acquisition frequency is set by the user via an interface 25. In particular, via the interface 25 the user sets a resolution P (for example within a range of between 1 and 5 mm) that is equal to the longitudinal travel of the mould 2 before the next frame is acquired and, thus, equal to the distance between two successive frames.

The moulds 2 carry with them respective identification codes, which are recognized by a remote data transmission device 26 (for example a bar code reader, or an RFID-type reader) in order to associate, with each mould 2, corresponding information contained in the memory 24, relating to geometric features of the mould 2 (dimension along the axis X, number N of cavities 7, height with respect to the conveyor 10 and thus position of the surface 8. etc.).

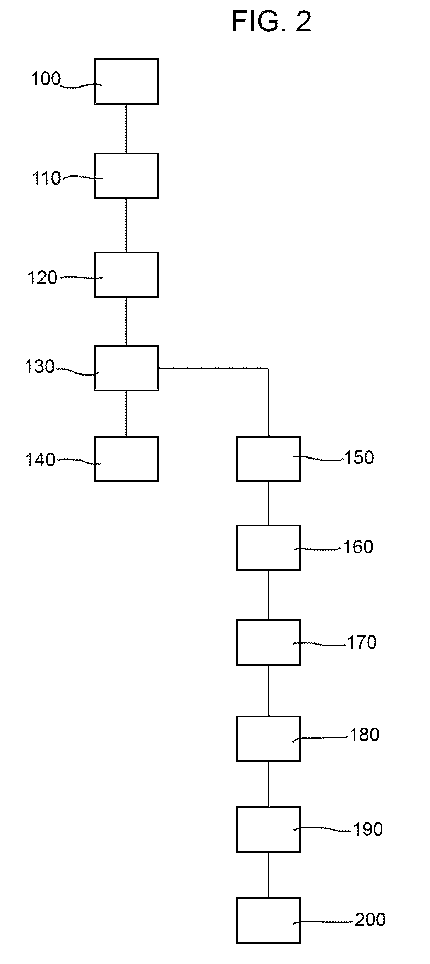

On the basis of the signal of the sensor 12 and of the dimension along the axis X of the mould 2, the unit 23 continuously verifies whether the mould 2 being checked has completed its passage through the zone 5, and thus whether it has been completely scanned by the beam 17. When all the frames of the mould 2 have been acquired, said frames are processed by the unit 23, in order to obtain an overall image of the mould 2 and to obtain numerical data that are compared against a reference model or template to determine the absence or presence of foodstuff residues in the cavities 7. The significant steps of the processing are shown in the block diagram of figure 2, with reference to the frame partially illustrated by way of example in figure 4.

The frames are first indexed, i.e. they are associated with a row index I, which corresponds to the position of each frame in the order in which they are stored (or to the coordinate of each frame on the axis X calculated according to the signal of the sensor 12, for example with respect to a reference integral with the mould 2).

Each frame undergoes an image processing to define an ordered sequence of points Q of the luminous line 20, from one lateral extremity to the other of the frame or of the mould 2, so that the points Q are arranged along the axis Y at a regular distance between centres that is equal to the resolution P set by the user (block 100). The points Q of each frame are also indexed, i.e. they are associated with a column index J, which corresponds to their position in the ordered sequence on the relative frame (or to their coordinate on the axis Y).

For each point Q_{J} and for each frame, the distance D_{I,J} of the point Q_{J} along the axis X from a horizontal straight reference line R_{I} is calculated (block 110) The straight line R_{I} has an equation that is stored and is defined by an ideal luminous straight line traced by the beam 17 on a flat horizontal surface coinciding with the surface 8.

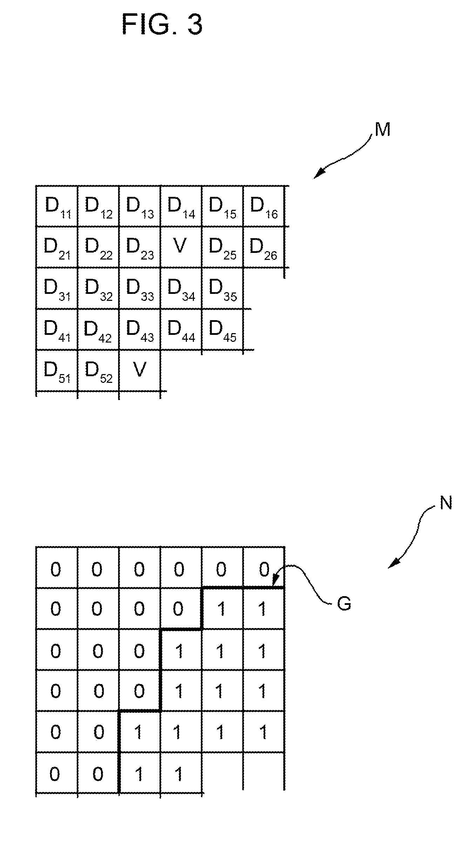

As schematically illustrated in figures 2 and 3, the calculated distances D_{I,J} are stored in a distance matrix M (block 120), with rows ordered according to the row index I, i.e. according to the position of the frames along the axis X in the mould 2, and with columns ordered according the column index J, i.e. according to the position of the points Q_{J} along the axis Y in each frame.

The distances D_{I,J} indicate the depth of the points Q_{J} with respect to the surface 8. The gain or sensitivity of the measurement between the distances D_{I,J} and the depth is determined by the angle B, in that the coefficient of proportionality between the two measurements is defined to a good level of approximation by the function tan(B).

For the points Q_{J} where it was not possible to calculate the distance D_{I,J} (for example if the luminous line 20 was not recognized due to optical disturbance) a subsequently identifiable constant V (for example V=-1) is assigned to the corresponding cells in the distance matrix M, instead of leaving these cells empty. The distance matrix M then undergoes a filtering process (block 130), to replace the constant V with values consistent with the measurement performed, by interpolating the distances D_{I,J} calculated for the adjacent points Q and which are, thus, placed in the adjacent cells of the distance matrix M.

The distance matrix M can be converted into an image (block 140) indicating the depth of the surface on which the luminous line 20 has been traced and made to pass, by assigning levels of grey or levels of colour to the distances D_{I,J} to be displayed on a screen in respective pixels, each of which corresponds to a respective cell of the distance matrix M. The relative position of the pixels is clearly made to match the relative position of the cells in the distance matrix M, identified by the row indices I and column indices J.

The distance matrix M is then binarized, (block 150), i.e. each of its cells is assigned a bit with a given logical value, according to the value of the distance D_{I,J} in order to obtain a matrix of bits N. If the distance D_{I,J} is equal to zero, or in any case less than a given threshold value close to zero so as to consider any possible background noise, the corresponding cell is assigned a bit with a logical value of zero; if the distance D_{I,J} is greater than said threshold value, a bit with a logical value of one is assigned to the corresponding cell. Thus, cells with logical-zero bits correspond to points Q arranged substantially in the plane of the surface 8; cells with logical-one bits correspond to points Q arranged at a depth and, thus, in a recess with respect to the surface 8.

At this point, in the bit matrix N groups G of adjacent cells all having logical-one bits are identified (block 160). Thus, each group G corresponds to a respective recess with respect to the surface 8. For each group G, the number of cells is counted to obtain a quantity A that indicates the number of internal points Q and thus the area in plan view of the corresponding recess (block 170). The proportionality constant between the area and the quantity A is a function of the chosen resolution P.

The calculated quantities A are compared against a reference relation, for example a stored range of values, indicating the value or values that the quantity A should have if the cavities 7 are completely empty and, thus, if the recesses identified and corresponding to the groups G coincide with the cavities 7 (block 180).

The number of groups G for which the quantity A satisfies the reference relation is then counted (block 190) in order to obtain a sum S, which is compared with the actual number N of cavities 7 present in the mould 2 (block 200). If the relation S=N is achieved, the cavities 7 are all completely empty, the result is positive and the mould 2 can proceed towards the start of the moulding process; if the relation S=N is not achieved, at least one of the cavities 7 is not completely empty, the result is negative and the mould 2 is expelled or removed from the conveyor 10 to be cleaned.

It is apparent that the number N and the reference relation against which the quantities A are compared define the reference model against which the data obtained from the frames are compared, to verify the absence of residues. Preferably, the reference model, possibly along with other information about the mould 2 (dimensions, equation of the straight line R_{I}, etc.) is/are obtained and stored by the device 1 during a first empty passage of each mould 2, i.e. during which each mould 2 passes through the zone 5 a first time, with the cavity 7 empty.

The above mentioned processing only verifies the presence of residual material that fills the entire depth of the cavity 7 due to the use of the binary system, but it is performed extremely quickly. In any case, as more powerful calculation tools become available in future, it will be possible to implement numerous variations.

For example, according to a first alternative embodiment, the distance D_{I,J} of each point Q_{J}, or the coordinate of each point Q_{J} along the axis X, or the level of grey or colour of the pixels of the overall image of the mould 2 are directly compared with the distances/coordinates/levels of reference, defining the absence/presence of residues on the basis of criteria to be defined from time to time, for example according to the shape of the cavities 7.

According to a second alternative embodiment, images are compared or subtracted directly from among the frames acquired and stored frames of reference.

According to a third alternative embodiment, algorithms generally referred to as pattern matching algorithms are applied.

According to a fourth alternative embodiment, the processing extracts information on the geometry of the cavities 7 and/or the openings 9 for comparison against the reference model. In this case, instead of performing a first empty passage of the moulds 2, the reference model could be defined by a stored mathematical model obtained by computer-aided design programs (commonly referred to as CAD models) to have the actual geometry of the mould 2 (shape and position of the openings 9 and/or of the inside surface of the cavities 7).

For example, in the bit matrix N it is possible to define the position of pairs of cells in which a logical value transition occurs (from zero to one and vice versa) and, thus, the "outline" of the groups G. The cells arranged along said "outline" correspond to the points defining the perimeter edge of the recesses detected in the mould 2 and each associated with a respective group G. The row I and column indices J, and the chosen resolution P, are used to reconstruct the plan of the perimeter edge of the detected recesses. Said edge is then compared with that of the openings 9 defined by the CAD model: if they match, the cavities 7 are empty.

The depth can also be calculated for each point Q_{J} using the distance matrix M, so as define the complete shape of the surface being checked on which the luminous line is traced: said shape is then compared against the actual shape of the mould 2 defined by the CAD model.

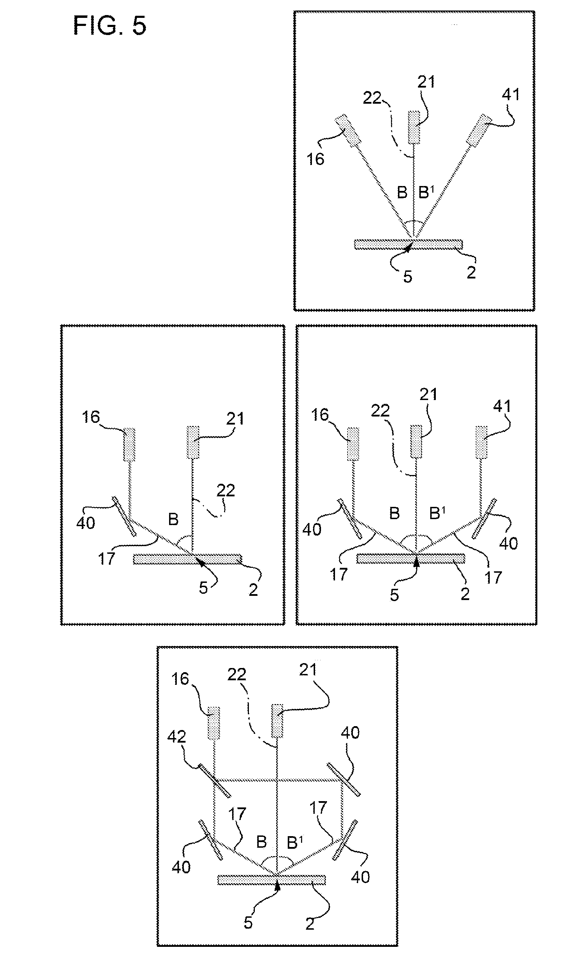

Figure 5 is a schematic illustration of some alternative embodiments of the device 1: in such alternative embodiments note that it is possible to use mirrors 40, and/or an additional light source 41, and/or a light beam splitter 42. With the solutions that envisage two light beams 17 (arranged on opposite sides of the direction 22 and incident on the mould 2 in the zone 5) luminous lines can be traced on the whole of the inside surface of the cavities 7 (without any so-called "shadow zones"), regardless of the angle of inclination of the light beams 17 with respect to said inside surface and thus regardless of the value of the angles B and B'. The two luminous lines 20 traced by the light beams 17 are substantially parallel, they are visualized together in each frame, and are sufficiently spaced along the axis X to avoid optical interference or errors of interpretation of the points Q on the frames during processing.

From the above it is apparent that visualizing the luminous line 20 from a point outside the plane of projection of the light beam 17, and thus in a direction 22 that forms an angle B other than zero with said plane, makes it possible to identify, in the form of the luminous line 20, distortions that indicate the presence of recesses and that can be processed to obtain data to be compared against a reference model. The method described and claimed herein is insensitive to the type and material of the moulded products, it does not alter the temperature of the moulds 2, and allows the conveyor 10 to be maintained at a high feeding speed and, at the same time, to obtain results and images that can be displayed on a screen in real-time.

With this method the user defines very few settings, and the device 1 is extremely simple to use, to install, to set and to service.

Lastly, from the above description, it is clear that modifications and variations may be made to the method and device 1 described herein without departing from the scope of the present invention as set forth in the appended claims.

The angle B could be an angle of other than 15°, for example it could be bigger to achieve greater precision of depth measurement; and/or the video camera or camera 21 could be arranged in different positions and/or the projection devices defined by the sources 16,41, the mirrors 40 and the splitter 42 could be arranged in different positions.

Each mould 2 could even have just one cavity; and/or the method could include the acquisition of a single frame with a single luminous line 20 for each cavity 7, said luminous line 20 being traced in the most critical position, i.e. where moulding residues are most likely to be found (in this case, there would be a sequence or array of numerical values instead of the matrices described above).

The same method could envisage a scanning motion by the light beam 17, instead of a feeding motion of the mould 2 along the axis X; or the mould 2 and the light beam 17 could both remain in fixed positions: in the latter case, for example, there could be a plurality of radial or parallel light beams, in order to trace a series of luminous lines that are spaced by the chosen resolution, and in order to acquire all the traced luminous lines together with a single image.

Moreover, for each mould 2, the reference model and any other information could be stored in a memory carried by said mould 2 and that can be readable and even writable remotely by the device 26, for example using RFID technology.

Lastly, the traced luminous line 20 could be a broken line.

## Claims

1. Checking method and device for verifying the absence of foodstuff residues in moulds for foodstuffs, in particular chocolate products; the method comprising the steps of projecting a light beam (17) on a mould (2) and of visualizing an image, and being **characterized in that** said light beam (17) lies in a plane of projection so as to trace at least one luminous line (20) on a surface (8) of the mould (2) having at least one cavity (7); and **in that** it comprises the additional steps of:
- visualizing said luminous line (20) from a vision point arranged outside said plane of projection;
- comparing data derived from the form of said luminous line (20) with a reference model, so as to produce a result indicating the presence/absence of residues.

2. Method according to claim 1, **characterized in that** the light beam is a laser light beam.

3. Method according to claim 1 or 2, **characterized by** processing the image of said luminous line; the processing comprising the steps of:
- recognizing the presence of at least one recess in said mould (2) as a function of the form of said luminous line (20);
- calculating a quantity (A) indicating the area in plan view of said recess;
- verifying whether said quantity (A) satisfies a reference relation.

4. Method according to claim 3, **characterized by** processing the image of said luminous line; the processing comprising the steps of:
- recognizing the presence of a plurality of recesses as a function of the form of said luminous line (20);
- calculating, for each of said recesses, a respective quantity (A) indicating the area in plan view of said recess;
- verifying, for each of said recesses, whether the respective quantity (A) satisfies a reference relation;
- counting the number (S) of recesses for which the quantity (A) satisfies said reference relation;
- comparing the number (S) of recesses that have been counted with a number of cavities (N) actually present in said mould (2).

5. Method according to any one of the previous claims, **characterized by** processing the image of said luminous line; the processing comprising the steps of:
- defining a plurality of points (Q) of said luminous line (20), and
- calculating the distances (D) of said points (Q) from a reference line (R), in order to obtain a distance array (M).

6. Method according to claim 5, **characterized in that** the processing comprises the steps of:
- comparing each distance (D) with a given threshold value, and
- binarizing said distance array (M) on the basis of the comparison against said threshold value, in order to obtain a bit array (N) with bits having a given logical value and each associated with a respective point (Q) of said luminous line (20).

7. Method according to claim 6, **characterized in that** said threshold value is approximately equal to zero.

8. Method according to claim 6 or 7, **characterized in that** the processing comprises the steps of:
- identifying, in said bit array (N), adjacent groups of bits (G) with bits having a same logic value;
- counting the number of bits in each identified group of adjacent bits (G).

9. Method according to claims 3 and 8, **characterized in that** the counted number of bits defines said quantity (A) indicating the area in plan view of said recess.

10. Method according to any one of the previous claims, **characterized by** comprising the steps of:
- moving said mould (2) and said light beam (17) with respect to one another in order to translate said luminous line (20) along a longitudinal axis (X), arranged transversely with respect to said plane of projection, and
- acquiring a plurality of frames of said luminous line (20) in sequence along said longitudinal axis (X).

11. Method according to claim 10, **characterized in that** said mould (2) is moved along said longitudinal axis (X) and said light beam (17) is held in a fixed position.

12. Method according to any one of the previous claims, **characterized in that** two light beams are projected in a same test zone (5); said light beams being arranged on opposite sides of said vision point.

13. Method according to claim 12, **characterized in that** the two light beams trace respective luminous lines that are spaced from one another and displayed together in the same image.

14. Checking device (1) for verifying the absence of foodstuff residues in moulds for foodstuffs, in particular chocolate products according to the method of any one of the previous claims; the device comprising vision means (21) and optical means (16) to project at least one light beam, and being **characterized in that** the projected light beam is a light beam lying in a plane of projection in order to trace at least one luminous line (20) on a surface (8) of the mould having at least one cavity (7); **in that** said vision means (21) are arranged outside said plane of projection and are directed in a direction (22) such as to visualize the traced luminous line (20); and **in that** it comprises processing means (23) to compare data derived from the form of said luminous line (20) against a reference model and provide a result indicating the presence/absence of residues.

15. Device according to claim 14, **characterized in that** said optical means comprise at least one laser light source (16).

16. Device according to claim 14 or 15, **characterized in that** said optical means comprise at least two optical devices (16,41;40,42) arranged on opposite sides with respect to the direction (22) in which said vision means (21) are directed, to project two light beams (17).

17. Device according to claim 16, **characterized in that** the two optical devices are arranged in positions so as to trace respective luminous lines that are spaced and substantially parallel.

18. Device according to any one of the claims from 14 to 17, **characterized in that** said optical means are fixed, and **in that** it comprises:
- conveyor means (8) to translate at least one mould (2) along a longitudinal axis (X);
- acquisition means (23,24) to store frames in sequence during the translation of said mould (2).
